# EUROPEAN PATENT APPLICATION

(11) **EP 2 138 228 A1**
(43) Date of publication of application: **30.12.2009**
(21) Application number: 08740586.6
(22) Date of filing: 17.04.2008
(51) Int. Cl.: B01J 20/18, B01D 53/56, B01D 53/81, F01N 3/08

(54) **METHOD FOR PRODUCING NOX ADSORBING MATERIAL AND NOX ADSORBING MATERIAL**

(30) Priority: 20.04.2007 JP 2007112085
(71) Applicant: Toyota Jidosha Kabushiki Kaisha, Toyota-shi Aichi 471-8571 (JP)
(72) Inventor: KANAZAWA, Takaaki, Toyota-shi Aichi 471-8571 (JP)
(74) Representative: Duckworth, Timothy John
(86) International application number: PCT/JP2008/057516
(87) International publication number: WO 2008/133181

(57) **Abstract**

A zeolite is impregnated with a ferric chloride aqueous solution; and then it is heated at 330 °C-500 °C in an atmosphere that is free from moisture, thereby subjecting Fe to ion exchange; and thereafter it is heat treated in a non-oxidizing atmosphere. By means of heat treating it in a non-oxidizing atmosphere, it is possible to stably produce an NOₓ adsorption material in which high NOₓ adsorbing performance is demonstrated, and which has high NOₓ adsorbing performance from the initial period.

## Description

### TECHNICAL FIELD

The present invention relates to an NOₓ adsorption material that is used for converting the exhaust gases of automobile, and to a production process for the same.

### BACKGROUND ART

As a catalyst for converting exhaust gas, catalyst which is for lean-burn engine, an NOₓ storage-and-reduction type catalyst has been used, NOₓ storage-and-reduction type catalyst which includes a noble metal and an NOₓ storage material. This NOₓ storage-and-reduction type catalyst stores NOₓ into the NOₓ storage material in lean atmosphere, and converts NOₓ, which have been released from the NOₓ storage material at the time of rich spiking, by reduction by means of reducing components, such as HC, which exist abundantly in the atmosphere.

However, in the NOₓ storage-and-reduction type catalyst, it is difficult to store NOₓ in low-temperature region like at the time of starting up, and so forth, and accordingly there has been such a drawback that NOₓ have been discharged in the low-temperature region. Hence, it has been thought of using an NOₓ adsorption material that is capable adsorbing NOₓ in the low-temperature region, and an exhaust-gas converting apparatus, in which an NOₓ adsorption material is put in place on the upstream side of an NOₓ storage-and-reduction type catalyst, in Japanese Unexamined Patent Publication (KOKAI) Gazette No. 2001-289,035, for instance.

As for the NOₓ adsorption material, the oxides of alkali metals, the oxidesofalkaline-earth metals,transition-metaloxides, such as CO₃O₄, NiO₂ MnO₂, Fe₂O₃ and ZrO₂ and zeolite are exemplified in the aforementioned gazette. Moreover, in Japanese Unexamined Patent Publication (KOKAI) Gazette No. 7-163,871, an NOₓ adsorption material is disclosed, NOₓ adsorption material which comprises CeO₂ and zeolite; and, in Japanese Unexamined Patent Publication (KOKAI) Gazette No. 2005-519, 551, an NOₓ adsorption material is disclosed, NOₓ adsorption material which comprises zeolite that is ion exchanged with a base metal, such as Fe, Cu and Mn.
Patent Literature NO. 1: Japanese Unexamined Patent Publication (KOKAI) Gazette No. 2001-289,035;
Patent Literature No. 2: Japanese Unexamined Patent Publication (KOKAI) Gazette No. 7-163,871; and
Patent Literature No. 3: Japanese Unexamined Patent Publication (KOKAI) Gazette No. 2005-514,551

### DISCLOSURE OF THE INVENTION

### Assignment to be Solved by the Invention

As a result of studying various NOₓ adsorption materials, the inventors of the present application found out that an NOₓ adsorption material, which is completed by ion exchanging zeolite with Fe, exhibits high NOₓ adsorbing capacity in low-temperature region. And, according to a liquid-phase exchanging method that uses an aqueous solution of water-soluble Fe salt, although the amount of ion exchanged Fe is less so that it is difficult to demonstrate desirable characteristics, it became apparent that a great amount of Fe can be ion exchanged by using a gas-phase exchanging method, which utilizes the sublimation of ferric chloride, and thereby an NOₓ adsorption material that is good in terms of NOₓ adsorbing characteristic is obtainable.

According to the gas-phase exchanging method utilizing the sublimation of ferric chloride, a zeolite powder is impregnated with an FeCl₃ aqueous solution, and thereafter FeCl₃ is vaporized by heating it to 330°C or more, the sublimation temperature of FeCl₃ or more. The vaporized FeCl₃ goes into the pores of zeolite, and is then supported on the cation exchange sites by means of ion exchange.

However, as a result of studying the vapor-phase exchanging method in more detail, it became apparent that the resulting NOₓ adsorbing performance fluctuates greatly depending on the heating conditions for subliming FeCl₃ and accordingly it is difficult to produce an NOₓ adsorption material that has stable NOₓ adsorbing performance. Moreover, even when subjecting Fe to ion exchange similarly, it became apparent that the resulting NOₓ adsorbing performance fluctuates greatly depending on zeolite species.

The present invention is one which has been done in view of the aforementioned circumstances, and it is an assignment to be solved to make it possible to stably produce an NOₓ adsorption member that has high NOₓ, adsorbing performance from the early period on.

### Means for Solving the Assignment

A characteristic of one of production processes according to the present invention which solves the aforementioned assignment lies in that: an impregnating step of impregnating a zeolite having cation exchange sites with a ferric chloride aqueous solution, thereby turning it into a ferric chloride-containing zeolite; an ion exchanging step of heating the ferric chloride-containing zeolite at 330 °C-500 °C in an atmosphere that is free from moisture, thereby subjecting Fe to ion exchange; and a heat treating step of heat treating the ferric chloride-containing zeolite after the ion exchanging step in a non-oxidizing atmosphere; are carried out in this order. It is desirable that the heat treating step can be carried out in a temperature range of 500 °C-700 °C.

A characteristic of another one of production processes according to the present invention lies in that: an impregnating step of impregnating a mordenite having cation exchange sites with a ferric chloride aqueous solution, thereby turning it into a ferric chloride-containing mordenite; and an ion exchanging step of heating the ferric chloride-containing mordenite at 330°C or more in an atmosphere that is free from moisture, thereby subjecting Fe to ion exchange; are carried out in this order.

In this production process, it is desirable that the mordenite can have an SiO₂/Al₂O₃ molar ratio that is 200 or less.

### Effect of the Invention

In accordance with the production processes for NOₓ adsorption material, it is surely possible to stably produce an NOₓ adsorption material that demonstrates high NOₓ adsorbing performance in the initial period of service.

### BRIEF DESCRIPTION OF THE DRAWINGS

Fig. 1 is a graph for illustrating the NO adsorption amounts of NOₓ adsorption materials according to examples and comparative examples; and
Fig. 2 is a graph for illustrating the NO adsorption amounts of NOₓ adsorption materials according to examples and comparative examples.

### Best Mode for Carrying Out the Invention

Since it is preferable to use those with a great amount of cation exchange sites for a zeolite, it is desirable to use those whose SiO₂/Al₂O₃ molar ratio is 200 or less therefor. As for such a zeolite, ZSM-5, mordenite and β-zeolite are available. Moreover, although it is possible to use type H and type NH₄ zeolites, it is preferable to use a type NH₄ that is good in terms of ion exchanging property in the case of utilizing a vapor-phase exchanging method that uses FeCl₃.

According to one of production processes according to the present invention, a ferric chloride-containing zeolite is first prepared by impregnating a zeolite with an FeCl₃ aqueous solution. Even according to a method of mixing a zeolite powder with an FeCl₃ powder physically and thereafter sublimating it, subjecting a certain extent of Fe to ion exchange is feasible. However, since the ion exchanging rate is low so that FeCl₃ escaping to the outside becomes greater, a method of impregnating it with an aqueous solution has been employed.

As for an impregnation amount of FeCl₃, it is desirable to impregnate a zeolite with it in an amount of the same mole as that of the Al atoms in the zeolite or more. This is because of the fact that, in a zeolite, ion exchange sites exist in an amount of the same number as the number of Al atoms, and accordingly the resulting NOₓ adsorbing performance improves the most in the case where all of them are ion exchanged with Fe.

At the subsequent ion exchanging step, the ferric chloride-containing zeolite is heated at 330 °C -500 °C in an atmosphere that is free from moisture. It is adapted herein into an atmosphere that is free from moisture, because the resulting NOₓ adsorbing performance declines when it is heated in an atmosphere that contains moisture; and it is believed to result from the fact that the degradation by means of aluminum elimination and the oxidation reaction of Fe being subjected to ion exchange have been facilitated.

The heating temperature at the ion exchanging step can be 330°C or more, that is, the sublimation temperature of FeCl₃ or more; the higher temperature it is, the shorter the processing time is required to complete it. However, since the oxidation reaction of Fe has developed when it becomes a high temperature too much, it is adapted into being 500 °C or less. When it is 400 °C, it is possible to carry out the ion exchange by the processing for approximately 30 minutes or more, and accordingly it is possible to fully carry out the ion exchange for about 5 hours at the longest.

The greatest feature of the present invention lies in that the heat treating step for heat treating the ferric chloride-containing zeolite after the ion exchanging step is carried out in a non-oxidizing atmosphere. By means of heat treating it in a non-oxidizing atmosphere, high NOₓ adsorbing performance is demonstrated. Although the reason therefor has not been apparent yet, it is believed because of the fact that the ion-exchanged Fe is reduced.

As for the non-oxidizing atmosphere, it can be an inert gas atmosphere, such as N₂ gas; or it can be a reducing atmosphere that contains H₂ or CO gas, and the like; however, it is desirable that it can be free from any oxidizing agent, such as oxygen or NO₂, and so forth. For example, when it is adapted into a mixture-gas atmosphere of N₂ gas with H₂ gas, it is possible to produce an NOₓ adsorption material, which possesses NOₓ adsorption material that is higher than that of one being obtained in the case where it is an N₂ gas atmosphere.

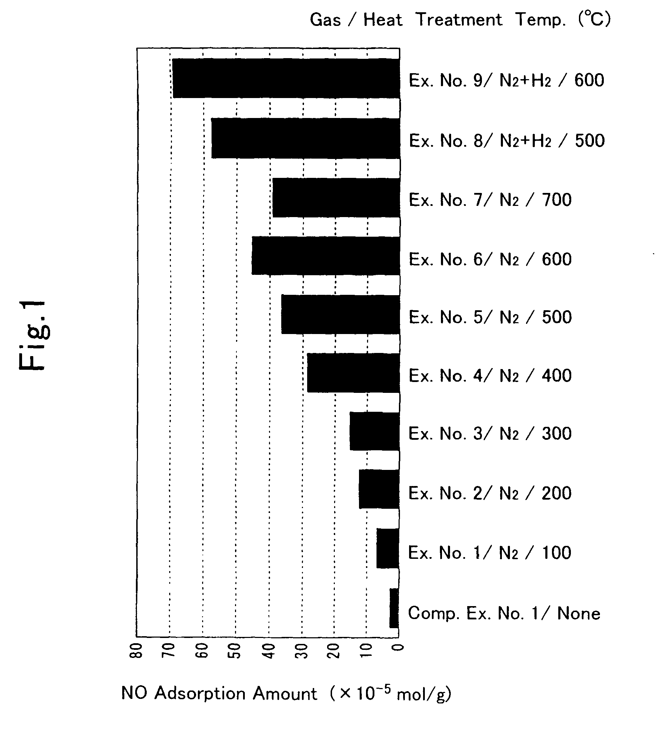

Moreover, it is desirable to carry out the heat treating step in a temperature range of 500 °C-700 °C. It is because the resulting NOₓ adsorption amount is insufficient when it is less than 500°C; and because the resulting NOₓ adsorption amount declines when it surpasses 700°C; as illustrated in Fig. 1. It is especially preferable to treat in the vicinity of 600 °C. Note that the heat treating time is not affected by the heat treating temperature so much, and a time period of 10 minutes approximately suffices therefor.

And, according to another one of production processes for NOₓ adsorption material according to the present invention, a mordenite is used as the zeolite. By means of using a mordenite, it is possible to produce an NOₓ adsorption material that is good in terms of initial NOₓ adsorbing performance without ever carrying out the heat treating step.

It is desirable that this mordenite can have an SiO₂/Al₂O₃ molar ratio that is 200 or less.

### EXAMPLES

Hereinafter, the present invention will be explained in detail by means of examples and comparative examples.

(Example No. 1)

NH₄-ZSM-5 whose SiO₂/Al₂O₃ molar ratio was 28 was made ready, and was then impregnated within an FeCl₃ aqueous solution in such a charging amount that the Fe atoms made 1:1 with respect to the Al atoms. After evaporating this to dryness by heating it at 120 °C, it was then heated to 400 °C by an electric furnace in an atmosphere that was free from moisture, and was held thereat for 5 hours. By means of this, FeCl₃ sublimed to vaporize, and thereby almost all of the cation exchange sites of the ZSM-5 were ion exchanged with Fe.

Thereafter, a heat treating step was carried out, heat treating step in which it was held at 100 °C for 10 minutes while distributing an N₂ gas.

(Example No. 2)

The same zeolite as that of Example No. 1 was used; was ion exchanged with Fe similarly; and was thereafter subjected to a heat treatment in the same manner as Example No. 1, except that the processing temperature at the heat treating step was adapted into being 200 °C.

(Example No. 3)

The same zeolite as that of Example No. 1 was used; was ion exchanged with Fe similarly; and was thereafter subjected to a heat treatment in the same manner as Example No. 1, except that the processing temperature at the heat treating step was adapted into being 300 °C.

(Example No. 4)

The same zeolite as that of Example No. 1 was used; was ion exchanged with Fe similarly; and was thereafter subjected to a heat treatment in the same manner as Example No. 1, except that the processing temperature at the heat treating step was adapted into being 400 °C.

(Example No. 5)

The same zeolite as that of Example No. 1 was used; was ion exchanged with Fe similarly; and was thereafter subjected to a heat treatment in the same manner as Example No. 1, except that the processing temperature at the heat treating step was adapted into being 500 °C.

(Example No. 6)

The same zeolite as that of Example No. 1 was used; was ion exchanged with Fe similarly; and was thereafter subjected to a heat treatment in the same manner as Example No. 1, except that the processing temperature at the heat treating step was adapted into being 600 °C.

(Example No. 7)

The same zeolite as that of Example No. 1 was used; was ion exchanged with Fe similarly; and was thereafter subjected to a heat treatment in the same manner as Example No. 1, except that the processing temperature at the heat treating step was adapted into being 700 °C.

(Example No. 8)

The same zeolite as that of Example No. 1 was used; was ion exchanged with Fe similarly; and thereafter a heat treating step was carried out, heat treating step in which it was held at 500 °C for 10 minutes while distributing an N₂ gas that contained 0.4% H₂.

(Example No. 9)

The same zeolite as that of Example No. 1 was used; was ion exchanged with Fe similarly; and thereafter a heat treating step was carried out, heat treating step in which it was held at 600 °C for 10 minutes while distributing an N₂ gas that contained 0.4% H₂.

(Comparative Example No. 1)

The same zeolite as that of Example No. 1 was used; was ion exchanged with Fe similarly; but no heat treating step was thereafter carried out.

<Test-Evaluation>

The NOₓ adsorption materials according to the respective examples and Comparative Example No. 1 were pelletized by an ordinary method, respectively, and were then offered for testing. Each of the pellets was charged into an evaluating apparatus in a predetermined amount; a model gas given in Table 1 was distributed at a temperature of 50 °C in a flow volume of 10 L/min. for 8 minutes; and the adsorption amounts of NO that had been adsorbed during the period were measured, respectively. The results are illustrated in Fig. 1.

**TABLE 1**

| NO (ppm) | CO (ppm) | CO₂ (%) | N₂ |
|---|---|---|---|
| 900 | 6000 | 15 | Balance |

From Fig. 1, it is apparent that the NOₓ adsorption amount is increased by means of carrying out the heat treating steps; and it is apparent that the NOₓ adsorption material according to the present invention adsorbs NO well in a low-temperature region of 50 °C. Moreover, it is also understood that the NOₓ adsorption amount increases as the heat treating temperature becomes higher; and accordingly it is understood that the higher the heat treating temperature is the more preferable it is. However, the NOₓ adsorption amount exhibits a distribution in which 600 °C makes the peak, and accordingly it is especially desirable that the heat treating steps can be carried out in a temperature range of 500 °C-700 °C.

Moreover, since the NOₓ adsorption materials according to Example Nos. 8 and 9 exhibited NO adsorption amounts that were greater than those of Example Nos. 5 and 6, it is also understood that the heat treating atmosphere can be carried out in a reducing atmosphere.

(Example No. 10)

An H-mordenite powder whose SiO₂/Al₂O₃ molar ratio was 28 was made ready in an amount of 20 g, and was then impregnated within an aqueous solution in which anhydrous FeCl₃ was dissolved in an amount of 3.4 g. After evaporating this to dryness by heating it at 120 °C, it was then heated to 400 °C by an electric furnace in an atmosphere that was free from moisture, and was held thereat for 5 hours. By means of this, FeCl₃ sublimed to vaporize, and thereby almost all of the cation exchange sites of the mordenite were ion exchanged with Fe.

(Comparative Example No. 2)

Fe was subjected to ion exchange in the same manner as Example No. 9, except that, instead of the mordenite powder, a type H-Y zeolite powder whose SiO₂/Al₂O₃ molar ratio was 6 was used in an amount of 20 g.

(Comparative Example No. 3)

Fe was subj ected to ion exchange in the same manner as Example No. 9, except that, instead of the mordenite powder, a type H-Y zeolite powder whose SiO_{z}/Al₂O₃ molar ratio was 12 was used in an amount of 20 g.

(Comparative Example No. 4)

Fe was subjected to ion exchange in the same manner as Example No. 9, except that, instead of the mordenite powder, a type Na-Y zeolite powder whose Sio₂/Al₂O₃ molar ratio was 5 was used in an amount of 20 g.

(Comparative Example No. 5)

Fe was subjected to ion exchange in the same manner as Example No. 9, except that, instead of the mordenite powder, a type K-L zeolite powder whose SiO_{z}/Al₂O₃ molar ratio was 6 was used in an amount of 20 g.

<Test-Evaluation>

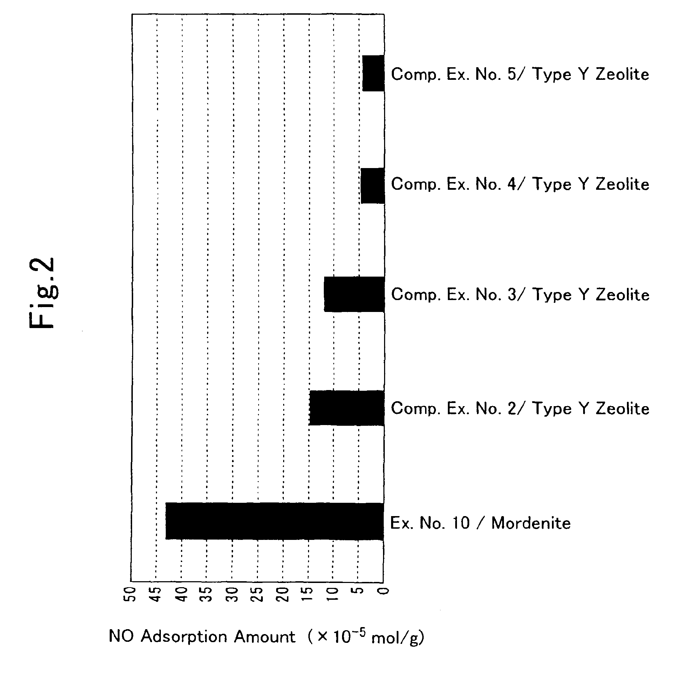

The NOₓ adsorption materials according to Example No. 10 and Comparative Example Nos . 2-5 were pelletized by an ordinary method, respectively, and were then offered for testing. Each of the pellets was charged into an evaluating apparatus in a predetermined amount; a 500-°C N₂ gas was distributed to purge them; a model gas given in Table 1 was thereafter distributed at a temperature of 50 °C in a flow volume of 10 L/min. for 8 minutes; and the adsorption amounts of NO that had been adsorbed during the period were measured, respectively. The results are illustrated in Fig. 2.

From Fig. 2, it is apparent that, without ever carrying out any heat treating step, the NOₓ adsorption material according to Example No. 10 showed a high NO adsorption amount compared with those of the NOₓ adsorption materials according to Comparative Example Nos. 2-5.

### INDUSTRIAL APPLICABILITY

In addition to putting the NOₓ adsorption material according to the present invention in place on the exhaust-gas upstream side of NOₓ storage-and-reduction type catalyst to use, it is also feasible to use it independently.

## Claims

1. A production process for NOₓ adsorption material, the production process being **characterized in that**:
an impregnating step of impregnating a zeolite having cation exchange sites with a ferric chloride aqueous solution, thereby turning it into a ferric chloride-containing zeolite;
an ion exchanging step of heating the ferric chloride-containing zeolite at 330 °C-500 °C in an atmosphere that is free from moisture, thereby subjecting Fe to ion exchange; and
a heat treating step of heat treating the ferric chloride-containing zeolite after the ion exchanging step in a non-oxidizing atmosphere; are carried out in this order.

2. The production process for NOₓ adsorption material as set forth in claim 1, wherein said zeolite is at least one member that is selected from the group consisting of ZSM-5, mordenite and β-zeolite.

3. The production process for NOₓ adsorption material as set forth in claim 1, wherein said heat treating step is carried out in a temperature range of 500 °C-700 °C.

4. The production process for NOₓ adsorption material as set forth in claim 1, wherein said heat treating step is carried out in an atmosphere that includes hydrogen.

5. A production process for NOₓ adsorption material, the production process being **characterized in that**:
an impregnating step of impregnating a mordenite having cation exchange sites with a ferric chloride aqueous solution, thereby turning it into a ferric chloride-containing mordenite; and
an ion exchanging step of heating the ferric chloride-containing mordenite at 330 °C or more in an atmosphere that is free from moisture, thereby subjecting Fe to ion exchange; are carried out in this order.

6. The production process for NOₓ adsorption material as set forth in claim 5, wherein said mordenite has an SiO₂/Al₂O₃ molar ratio that is 200 or less.

7. An NOₓ adsorption material comprising one that is produced by the production process as set forth in either one claims 1-6.
